# EUROPEAN PATENT APPLICATION

(11) **EP 4 406 683 A1**
(43) Date of publication of application: **31.07.2024**
(21) Application number: 21962479.8
(22) Date of filing: 29.10.2021
(51) Int. Cl.: B23H 1/10

(54) **WIRE ELECTRICAL DISCHARGE MACHINE, AND METHOD FOR CONTROLLING WIRE ELECTRICAL DISCHARGE MACHINE**

(71) Applicant: FANUC CORPORATION, Oshino-mura Minamitsuru-gun Yamanashi 401-0597 (JP)
(72) Inventor: YOKOYAMA, Satohiro, Minamitsuru-gun, Yamanashi 401-0597 (JP); MAKINO, Yoshinori, Minamitsuru-gun, Yamanashi 401-0597 (JP)
(74) Representative: Keil & Schaafhausen Patentanwälte PartGmbB
(86) International application number: PCT/JP2021/040049
(87) International publication number: WO 2023/073938

(57) **Abstract**

A wire electrical discharge machine (20) comprises: pumps (312, 314, 316, 318); a numerical value control device (212) including a pump control unit (620) that controls the pumps to drive the pumps when a power supply is in an ON state; a temperature acquisition unit (710) that acquires an environmental temperature (TP) or working fluid temperature (TP); and a power supply control unit (720) that switches the numerical value control device to the power supply ON state when the numerical value control device is in a power supply OFF state, and the temperature is lower than a predetermined temperature (STP).

## Description

### TECHNICAL FIELD

The present invention relates to a wire electrical discharge machine and a method for controlling a wire electrical discharge machine.

### BACKGROUND ART

JP 2017-019046 A discloses a working fluid supply device for an electrical discharge machine, in which a working fluid is supplied by a pump included in the working fluid supply device.

### SUMMARY OF THE INVENTION

According to the disclosure of JP 2017-019046 A, there is a problem that a working fluid may freeze while the control device of the working fluid supply device is in a power-off state.

The present invention has the object of solving the aforementioned problem.

A first aspect of the present invention is a wire electrical discharge machine for machining a workpiece immersed in a working fluid, by using a wire electrode, the wire electrical discharge machine including: a pump configured to suck and discharge the working fluid; a numerical control device including a pump control unit configured to control the pump to drive the pump when the numerical control device is in a power-on state; a temperature acquisition unit configured to acquire a temperature of an environment in which the wire electrical discharge machine is installed or a temperature of the working fluid; and a power supply control unit configured to switch the numerical control device to the power-on state when the numerical control device is in a power-off state and the temperature acquired by the temperature acquisition unit is lower than a predetermined temperature.

A second aspect of the present invention is a method for controlling a wire electrical discharge machine that machines a workpiece immersed in a working fluid, by using a wire electrode, the method including: a pump control step of controlling and driving a pump configured to suck and discharge the working fluid, when a numerical control device of the wire electrical discharge machine is in a power-on state; a temperature acquisition step of acquiring a temperature of an environment in which the wire electrical discharge machine is installed or a temperature of the working fluid; and a first power supply control step of switching the numerical control device to the power-on state when the numerical control device is in a power-off state and the temperature acquired in the temperature acquisition step is lower than a predetermined temperature.

According to the present invention, it is possible to prevent the working fluid from freezing while the numerical control device of the wire electrical discharge machine is in the power-off state.

### BRIEF DESCRIPTION OF DRAWINGS

FIG. 1 is a diagram showing a configuration of a wire electrical discharge machine according to an embodiment and peripheral devices;
FIG. 2 is a diagram illustrating a change in energization state of a numerical control device;
FIG. 3 is a flowchart showing an energization control process of the numerical control device by an energization control device; and
FIG. 4 is a flowchart showing a pump control process by the numerical control device.

### DETAILED DESCRIPTION OF THE INVENTION

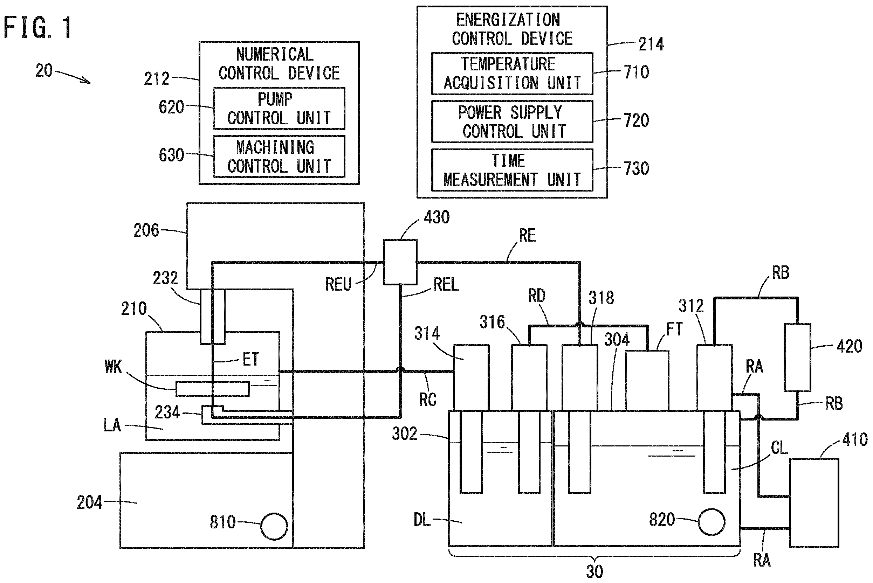

FIG. 1 is a diagram showing the configuration of a wire electrical discharge machine 20 according to an embodiment and its peripheral devices. The wire electrical discharge machine 20 is supplied with a dielectric working fluid from a working fluid supply device 30. The wire electrical discharge machine 20 performs electrical discharge machining on a workpiece WK immersed in the working fluid LA by using a wire electrode ET. The wire electrical discharge machine 20 includes a bed 204, a main body 206, a work pan 210, a numerical control device 212, an energization control device 214, an upper wire guide 232, a lower wire guide 234, and a working fluid supply device 30. The energization control device 214 can control the numerical control device 212 to place the numerical control device 212 in a power-on state or a power-off state. When the numerical control device 212 is in the power-on state, a plurality of pumps (described later) and motors (not shown) included in the working fluid supply device 30 can be driven. When the numerical control device 212 is in the power-off state, the pumps and the motors are stopped. The numerical control device 212 and the energization control device 214 shown in FIG. 1 may be physically integrated into a single device.

The work pan 210 is installed on the bed 204. The work pan 210 stores the working fluid LA. The workpiece WK is placed in the work pan 210 by a table (not shown). Both the upper wire guide 232 and the lower wire guide 234 are mounted to the main body 206. The upper wire guide 232 and the lower wire guide 234 are arranged above and below the workpiece WK, respectively. When the workpiece WK is placed, the upper wire guide 232 and the lower wire guide 234 support the wire electrode ET above and below the workpiece WK, respectively.

The working fluid supply device 30 includes a dirty liquid tank 302, a clean liquid tank 304, and a plurality of pumps described later. The dirty liquid tank 302 stores dirty liquid DL. The dirty liquid DL is a working fluid containing machining chips (sludge) formed as a result of machining of the workpiece WK in the work pan 210. The dirty liquid DL flows through a flow path (not shown) and is output from the work pan 210 to the dirty liquid tank 302. The clean liquid tank 304 stores clean liquid CL. The clean liquid CL is a working fluid obtained by removing machining chips contained in the dirty liquid DL with a filter FT. That is, the filter FT turns the working fluid from the dirty liquid DL into the clean liquid CL.

The plurality of pumps of the working fluid supply device 30 include a circulation pump 312, a storage pump 314, a filter pump 316, and a working fluid pump 318. The circulation pump 312 supplies working fluid to a temperature adjustment device 410 by sucking working fluid (clean liquid CL) stored in the clean liquid tank 304 and discharging the working fluid to a flow path RA. The temperature adjustment device 410 adjusts the temperature of the supplied working fluid. The temperature adjustment device 410 adjusts the temperature of the working fluid to a predetermined temperature by heating or cooling the working fluid. The working fluid whose temperature has been adjusted is recovered from the temperature adjustment device 410 to the clean liquid tank 304. The circulation pump 312 further supplies working fluid (clean liquid CL) to an ion exchange resin 420 by discharging the working fluid (clean liquid CL) to a flow path RB. The ion exchange resin 420 reduces the electrical conductivity of the working fluid. The working fluid with reduced electrical conductivity is recovered from the ion exchange resin 420 to the clean liquid tank 304.

The storage pump 314 supplies working fluid to the work pan 210 by sucking working fluid (dirty liquid DL) stored in the dirty liquid tank 302 and discharging the working fluid to a flow path RC. The storage pump 314 may supply working fluid to the work pan 210 by sucking the working fluid (clean liquid CL) stored in the clean liquid tank 304, instead of the dirty liquid tank 302, and discharging the working fluid to the flow path RC. The filter pump 316 supplies working fluid to the filter FT by sucking the working fluid (dirty liquid DL) stored in the dirty liquid tank 302 and discharging the working fluid to a flow path RD. The filter FT removes machining chips contained in the working fluid (dirty liquid DL). The working fluid (clean liquid CL) from which the machining chips have been removed is stored in the clean liquid tank 304.

The working fluid pump 318 sucks the working fluid (clean liquid CL) stored in the clean liquid tank 304 and discharges the working fluid to a flow path RE. The working fluid flowing through the flow path RE is divided into a working fluid flowing through the flow path REU and a working fluid flowing through the flow path REL, by a manifold 430. The flow path REU leads from the manifold 430 to the upper wire guide 232. The working fluid supplied by the working fluid pump 318 is ejected (jetted) from the upper wire guide 232 toward the workpiece WK when the workpiece WK is machined by the wire electrical discharge machine 20 and when the wire electrode ET is fed. The flow path REL leads from the manifold 430 to the lower wire guide 234. The working fluid supplied by the working fluid pump 318 may be ejected from the lower wire guide 234 toward the workpiece WK when the workpiece WK is machined by the wire electrical discharge machine 20.

The numerical control device 212 includes a processing circuit and a memory in which a program is stored. By executing the program, the processing circuit functions as the numerical control device 212 of the present embodiment. The numerical control device 212 controls the plurality of pumps included in the working fluid supply device 30 and the machining of the workpiece WK by the wire electrical discharge machine 20. The memory includes a volatile memory such as a RAM or the like, and a nonvolatile memory such as a ROM and a flash memory or the like. The processing circuit includes a processor such as a CPU or the like.

The processing circuit of the numerical control device 212 executes a program, and thus the numerical control device 212 functions as a pump control unit 620 and a machining control unit 630. At least one of the pump control unit 620 or the machining control unit 630 may be realized by an ASIC, a FPGA, or another integrated circuit.

When the numerical control device 212 is in the power-on state, the pump control unit 620 can control and drive the plurality of pumps included in the working fluid supply device 30 described above. When the numerical control device 212 is in the power-on state, the pump control unit 620 drives at least one of the circulating pump 312, the storage pump 314, the filter pump 316, or the working fluid pump 318. When the numerical control device 212 is in the power-on state, the machining control unit 630 can drive the motors (not shown) in accordance with a machining program, to thereby control the machining of the workpiece WK.

The energization control device 214 includes a processing circuit and a memory in which a program is stored. By executing the program, the processing circuit functions as the energization control device 214 of the present embodiment. The energization control device 214 continues to operate with standby electricity even while the numerical control device 212 is in the power-off state. The energization control device 214 controls energization of the numerical control device 212 in accordance with temperature or time as described later. The memory includes a volatile memory such as a RAM or the like, and a nonvolatile memory such as a ROM and a flash memory or the like. The processing circuit includes a processor such as a CPU or the like.

The processing circuit of the energization control device 214 executes the program, and the energization control device 214 thereby functions as a temperature acquisition unit 710, a power supply control unit 720, and a time measurement unit 730. At least part of the temperature acquisition unit 710, the power supply control unit 720, and the time measurement unit 730 may be realized by an ASIC, a FPGA, or another integrated circuit.

The temperature acquisition unit 710 acquires the temperature of the environment in which the wire electrical discharge machine 20 is installed, based on the output signal of a temperature sensor 810 received via a network (not shown). The temperature sensor 810 is installed, for example, on the bed 204 of the wire electrical discharge machine 20 or in the vicinity thereof. The temperature sensor 810 may be disposed outside the wire electrical discharge machine 20 inside a room in which the wire electrical discharge machine 20 is installed. The temperature acquisition unit 710 may acquire the temperature of the working fluid based on the output signal of the temperature sensor 820 received via a network (not shown). The temperature sensor 820 is installed in the working fluid supply device 30, for example. The temperature sensors 810 and 820 are sensors that detect a temperature.

The power supply control unit 720 manages the energization state of the numerical control device 212. The energization state is a power-off state and a power-on state of the wire electrical discharge machine 20. When the numerical control device 212 is in the power-off state and the temperature TP acquired by the temperature acquisition unit 710 is lower than a predetermined temperature STP, the power supply control unit 720 outputs a start-up signal to the numerical control device 212 to cause the numerical control device 212 to be placed in the power-on state. In the present embodiment, the value of the predetermined temperature STP is the lowest value of the temperature at which freezing of the working fluid can be prevented. When the temperature TP is lower than the predetermined temperature STP, the working fluid may freeze, and as such, the power supply control unit 720 switches the numerical control device 212 from the power-off state to the power-on state. The power supply control unit 720 manages the energization state of the numerical control device 212 by changing the energization state from the power-off state to the power-on state.

The time measurement unit 730 acquires time information from a clock circuit or a timer circuit (not illustrated) to measure a first elapsed time TM1 from when the numerical control device 212 is switched from the power-off state to the power-on state. When the first elapsed time TM1 reaches the first predetermined time PTM1, the power supply control unit 720 switches the numerical control device 212 from the power-on state to the power-off state. The power supply control unit 720 manages the energization state of the numerical control device 212 by changing the energization state from the power-on state to the power-off state.

The time measurement unit 730 acquires time information from a clock circuit or a timer circuit (not illustrated) to measure a second elapsed time TM2 from when the numerical control device 212 is switched from the power-on state to the power-off state. Even if the temperature TP acquired by the temperature acquisition unit 710 is lower than the predetermined temperature STP, the power supply control unit 720 does not switch the numerical control device 212 from the power-off state to the power-on state until the second elapsed time TM2 reaches a second predetermined time PTM2. When the second elapsed time TM2 has reached the second predetermined time PTM2, the power supply control unit 720 switches the numerical control device 212 from the power-off state to the power-on state. The power supply control unit 720 manages the energization state of the numerical control device 212 by changing the energization state from the power-off state to the power-on state.

The time measurement unit 730 may include a time measurement unit that measures the first elapsed time TM1 and a time measurement unit that measures the second elapsed time TM2. In this case, the numerical control device 212 may include the time measurement unit that measures the first elapsed time TM1.

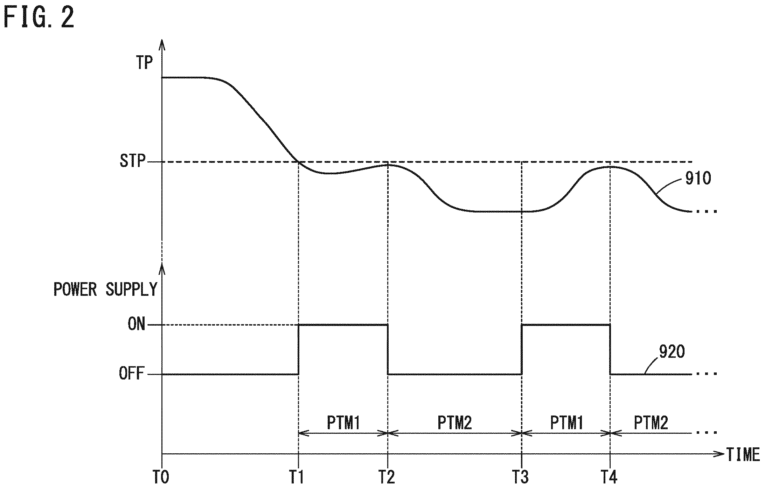

FIG. 2 is a diagram illustrating a change in the energization state of the numerical control device 212. A graph 910 represents an example of how the temperature TP acquired by the temperature acquisition unit 710 changes with time. A graph 920 represents an example of how the energization state of the numerical control device 212 changes according to the temperature TP and with time.

As shown in the graph 920, at start time T0, the numerical control device 212 is in the power-off state. As shown in the graph 910, the temperature TP decreases as the time passes from the time T0. At time T1, the temperature TP falls below the predetermined temperature STP, and accordingly the numerical control device 212 is switched from the power-off state to the power-on state. The pump control unit 620 controls and drives, for example, the circulation pump 312 among the plurality of pumps included in the working fluid supply device 30. The circulation of the working fluid in this manner prevents the working fluid from freezing. Further, the working fluid is heated by the temperature adjustment device 410, and the temperature of the working fluid changes from a decrease to an increase. When the working fluid supply device 30 starts operating, the temperature of the environment in which the wire electrical discharge machine 20 including the working fluid supply device 30 is installed also changes from a decrease to an increase. That is, the temperature TP changes from a decrease to an increase.

When the first predetermined time T1 has elapsed from the time PTM1 and the time T2 is reached, the numerical control device 212 is switched from the power-on state to the power-off state. In the example (graph 910) shown in FIG. 2, the temperature TP still remains in a state of being lower than the predetermined temperature STP at the time T2. Since the wire electrical discharge machine 20 stops operating at the time T2 and the circulation and heating of the working fluid are stopped, the temperature TP starts to gradually decrease as the time passes from the time T2.

Even if the temperature TP is lower than the predetermined temperature STP, the numerical control device 212 is not switched from the power-off state to the power-on state until the second predetermined time PTM2 elapses from the time T2. At the time T3 after the second predetermined time PTM2 has elapsed, the temperature TP is lower than the predetermined temperature STP, and thus the numerical control device 212 is switched from the power-off state to the power-on state again. As a result, the temperature TP starts to rise again.

When the first predetermined time PTM1 has elapsed since the time T3 and the time T4 has been reached, the numerical control device 212 is switched from the power-on state to the power-off state again. In the example (graph 910) shown in FIG. 2, the temperature TP still remains in a state of being lower than the predetermined temperature STP at the time T4. Since the working fluid supply device 30 stops operating at the time T4 and the circulation and heating of the working fluid is stopped, the temperature TP starts to gradually decrease as time passes from the time T4.

Even if the temperature TP is lower than the predetermined temperature STP, the numerical control device 212 is not switched from the power-off state to the power-on state until the second predetermined time PTM2 elapses from the time T4. If the temperature TP is lower than the predetermined temperature STP at the time when the second predetermined time PTM2 has elapsed, the numerical control device 212 is switched from the power-off state to the power-on state again. As a result, the temperature TP starts to rise again. If the temperature TP is higher than the predetermined temperature STP at the time when the second predetermined time PTM2 has elapsed, the numerical control device 212 is not switched from the power-off state to the power-on state, and remains in the power-off state.

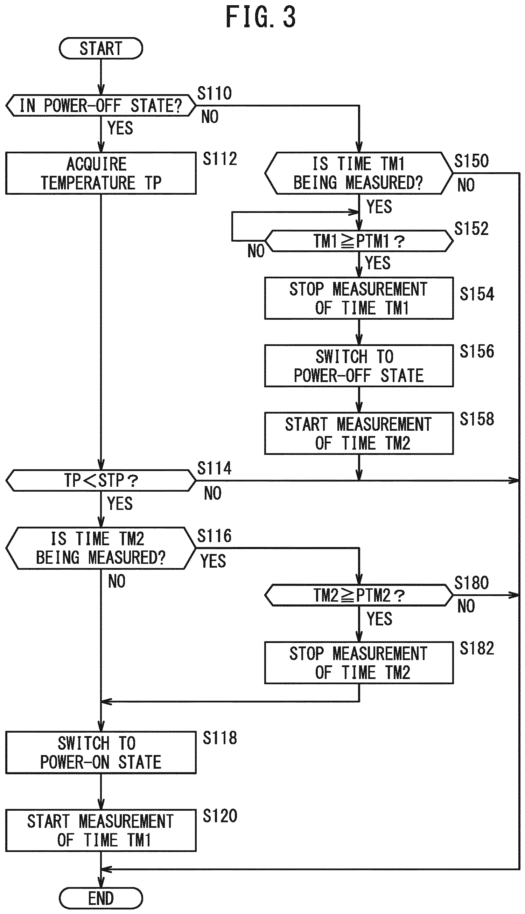

FIG. 3 is a flowchart showing an energization control process of the numerical control device 212 by the energization control device 214. The present process executed by the energization control device 214 is repeatedly executed. When this process is started, the power supply control unit 720 determines in step S110 whether or not the numerical control device 212 is in the power-off state. If the determination result in step S110 is YES, the process proceeds to step S112. If the determination result in step S110 is NO, the process proceeds to step S150.

In step S112, the temperature acquisition unit 710 acquires the temperature TP. In step S114, the power supply control unit 720 determines whether or not the temperature TP acquired by the temperature acquisition unit 710 is lower than the predetermined temperature STP. If the determination result in step S114 is YES, the process proceeds to step S116. If the result of step S114 is NO, the working fluid is unlikely to freeze, and thus the process is terminated.

In step S116, the power supply control unit 720 determines whether or not the second elapsed time TM2 is being measured by the time measurement unit 730. If the determination result in step S116 is YES, the process proceeds to step S180. If the determination result in step S116 is NO, the process proceeds to step S118.

In step S118, the power supply control unit 720 places the numerical control device 212 into the power-on state. In step S120, the time measurement unit 730 starts measuring the first elapsed time TM1. When step S120 is completed, the present process is put to an end.

In step S150, the power supply control unit 720 determines whether or not the first elapsed time TM1 is being measured by the time measurement unit 730. If the determination result in step S150 is YES, the process proceeds to step S152. If the determination result in step S150 is NO, it is considered that the numerical control device 212 has been placed in the power-on state by a manual operation of the user or the like, and thus the present process is put to an end.

In step S152, the power supply control unit 720 determines whether or not the first elapsed time TM1 measured by the time measurement unit 730 is equal to or longer than the first predetermined time PTM1. If the determination result in step S152 is YES, the process proceeds to step S154. If the determination result in step S152 is NO, step S152 is repeated until the result in step S152 is YES.

In step S154, the time measurement unit 730 stops measuring the first elapsed time TM1. In step S156, the power supply control unit 720 switches the numerical control device 212 to the power-off state. In step S158, the time measurement unit 730 starts measuring the second elapsed time TM2. When step S158 is completed, the present process is put to an end.

In step S180, the power supply control unit 720 determines whether or not the second elapsed time TM2 measured by the time measurement unit 730 is equal to or longer than the second predetermined time PTM2. If the determination result in step S180 is YES, the process proceeds to step S182. If the determination result in step S180 is NO, the process ends.

In step S182, the time measurement unit 730 stops measuring the second elapsed time TM2. When step S182 is completed, the process proceeds to step S118 described above.

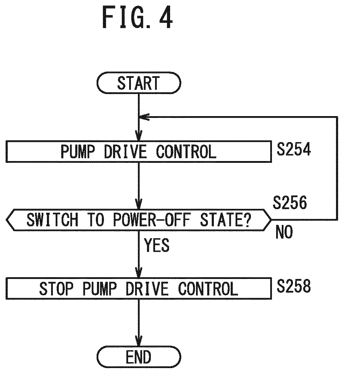

FIG. 4 is a flowchart showing a pump control process by the numerical control device 212. The present process executed by the numerical control device 212 is executed when the numerical control device 212 has been placed in the power-on state. When the present process is started, the pump control unit 620 controls the circulation pump 312 to drive the circulation pump 312, in step S254. The temperature of the working fluid is maintained at a temperature at which the working fluid does not freeze, by driving the circulation pump 312. The pump control unit 620 may drive a pump other than the circulation pump 312 in addition to the circulation pump 312 or instead of the circulation pump 312. When the pump control unit 620 drives the working fluid pump 318, the working fluid supplied by the working fluid pump 318 is ejected toward the table (not shown) instead of the workpiece WK. In this case, the wire electrode ET does not need to be fed.

In step S256, the pump control unit 620 determines whether or not the numerical control device 212 is switched to the power-off state. If the determination result in step S256 is YES, the process proceeds to step S258. If the determination result in step S256 is NO, the process returns to step S254.

In step S258, the pump control unit 620 stops the pump drive control. When step S258 is completed, the present process is put to an end.

The present invention is not limited to the above-described embodiment, and various configurations can be adopted therein without departing from the essence and gist of the present invention.

### [Inventions that can be Obtained from the Embodiment]

The invention that can be grasped from the above embodiment is described below.
(1) The wire electrical discharge machine (20) for machining the workpiece (WK) immersed in the working fluid (LA, DL, CL), by using the wire electrode (ET), includes: the pump (312, 314, 316, 318) configured to suck and discharge the working fluid; the numerical control device (212) including the pump control unit (620) configured to control the pump to drive the pump when the numerical control device is in the power-on state; the temperature acquisition unit (710) configured to acquire the temperature (TP) of the environment in which the wire electrical discharge machine is installed or the temperature (TP) of the working fluid; and the power supply control unit (720) configured to switch the numerical control device to the power-on state when the numerical control device is in the power-off state and the temperature acquired by the temperature acquisition unit is lower than the predetermined temperature (STP). This makes it possible to prevent the working fluid from freezing while the numerical control device is in the power-off state.
(2) The pump may include the first pump (312) that supplies the working fluid to the temperature adjustment device (410) that adjusts the temperature of the working fluid. This can reduce the possibility that the numerical control device is switched to the power-on state again, for the purpose of antifreezing of the working fluid, shortly after the numerical control device returns to the power-off state.
(3) The pump may include the second pump (312) that supplies the working fluid to the ion exchange resin (420) for reducing the electrical conductivity of the working fluid. This makes it possible to more quickly prevent the working fluid from freezing.
(4) The pump may include the third pump (314) that supplies the working fluid to the work pan (210) that stores the working fluid in which the workpiece is immersed. This can prevent the working fluid stored in the work pan from freezing.
(5) The pump may include the fourth pump (316) that supplies the dirty liquid (DL) to the filter (FT) that turns the working fluid from the dirty liquid to the clean liquid (CL). This prevents the working fluid stored in the dirty liquid tank and the clean liquid tank of the working fluid supply device from freezing.
(6) The wire electrical discharge machine may further include the upper wire guide (232) and the lower wire guide (234) that support the wire electrode above and below the workpiece, respectively, and the pump may include the fifth pump (318) that supplies the working fluid ejected from the upper wire guide toward the workpiece, when the workpiece is machined by the wire electrical discharge machine and when the wire electrode is fed. This can prevent the working fluid stored in the work pan from freezing.
(7) The wire electrical discharge machine may further include the time measurement unit (730) configured to measure the first elapsed time (TM1) from when the numerical control device is switched to the power-on state by the power supply control unit, and the power supply control unit may switch the numerical control device to the power-off state when the first elapsed time has reached the first predetermined time (PTM1). This makes it possible to prevent the numerical control device from being maintained in the power-on state despite the fact that the possibility of freezing has decreased due to the working fluid flowing through the flow path.
(8) The time measurement unit may measure the second elapsed time (TM2) from when the numerical control device is switched to the power-off state by the power supply control unit, and even when the temperature acquired by the temperature acquisition unit is lower than the predetermined temperature, the power supply control unit may not switch the numerical control device to the power-on state until the second elapsed time reaches a second predetermined time (PTM2). This can prevent the energization state of the numerical control device from being frequently switched.
(9) The method for controlling the wire electrical discharge machine (20) that machines the workpiece (WK) immersed in the working fluid (LA, DL, CL), by using the wire electrode (ET), includes: the pump control step of controlling and driving the pump configured to suck and discharge the working fluid, when the numerical control device (212) of the wire electrical discharge machine is in the power-on state; the temperature acquisition step of acquiring the temperature (TP) of the environment in which the wire electrical discharge machine is installed or the temperature (TP) of the working fluid; and the first power supply control step of switching the numerical control device to the power-on state when the numerical control device is in the power-off state and the temperature acquired in the temperature acquisition step is lower than the predetermined temperature (STP). This makes it possible to prevent the working fluid from freezing while the numerical control device is in the power-off state.
(10) The method for controlling the wire electrical discharge machine, further includes: the first time measurement step of measuring the first elapsed time (TM1) from when the numerical control device is switched to the power-on state in the first power supply control step; and the second power supply control step of switching the numerical control device to the power-off state when the first elapsed time has reached the first predetermined time (PTM1). This makes it possible to prevent the numerical control device from being maintained in the power-on state despite the fact that the possibility of freezing has decreased due to the working fluid flowing through the flow path.
(11) The method for controlling the wire electrical discharge machine, may further include the second time measurement step of measuring the second elapsed time (TM2) from when the numerical control device is switched to the power-off state in the second power supply control step, and in the first power supply control step, even when the temperature acquired in the temperature acquisition step is lower than the predetermined temperature, the numerical control device may be not switched to the power-on state until the second elapsed time reaches the second predetermined time (PTM2). This can prevent the energization state of the numerical control device from being frequently switched.

### Reference Signs List

20: wire electrical discharge machine
30: working fluid supply device
204: bed
206: main body
210: work pan
212: numerical control device
214: energization control device
232: upper wire guide
234: lower wire guide
302: dirty liquid tank
304: clean liquid tank
312: circulation pump
314: storage pump
316: filter pump
318: working fluid pump
410: temperature adjustment device
420: ion exchange resin
620: pump control unit
630: machining control unit
710: temperature acquisition unit
720: power supply control unit
730: time measurement unit
810, 820: temperature sensor
910, 920: graph

## Claims

1. A wire electrical discharge machine (20) for machining a workpiece (WK) immersed in a working fluid (LA, DL, CL), by using a wire electrode (ET), the wire electrical discharge machine comprising:
a pump (312, 314, 316, 318) configured to suck and discharge the working fluid;
a numerical control device (212) including a pump control unit (620) configured to control the pump to drive the pump when the numerical control device is in a power-on state;
a temperature acquisition unit (710) configured to acquire a temperature (TP) of an environment in which the wire electrical discharge machine is installed or a temperature (TP) of the working fluid; and
a power supply control unit (720) configured to switch the numerical control device to the power-on state when the numerical control device is in a power-off state and the temperature acquired by the temperature acquisition unit is lower than a predetermined temperature (STP).

2. The wire electrical discharge machine according to claim 1, wherein
the pump includes a first pump (312) configured to supply the working fluid to a temperature adjustment device (410) configured to adjust the temperature of the working fluid.

3. The wire electrical discharge machine according to claim 1 or 2, wherein
the pump includes a second pump (312) configured to supply the working fluid to an ion exchange resin (420) configured to reduce an electrical conductivity of the working fluid.

4. The wire electrical discharge machine according to any one of claims 1 to 3, wherein
the pump includes a third pump (314) configured to supply the working fluid to a work pan (210) configured to store the working fluid in which the workpiece is immersed.

5. The wire electrical discharge machine according to any one of claims 1 to 4, wherein
the pump includes a fourth pump (316) configured to supply dirty liquid (DL) to a filter (FT) configured to turn the working fluid from the dirty liquid into clear liquid (CL).

6. The wire electrical discharge machine according to any one of claims 1 to 5, further comprising:
an upper wire guide (232) and a lower wire guide (234) configured to support the wire electrode above and below the workpiece, respectively,
wherein the pump includes a fifth pump (318) configured to supply the working fluid that is ejected from the upper wire guide toward the workpiece, when the workpiece is machined by the wire electrical discharge machine and when the wire electrode is fed.

7. The wire electrical discharge machine according to any one of claims 1 to 6, further comprising:
a time measurement unit (730) configured to measure a first elapsed time (TM1) from when the numerical control device is switched to the power-on state by the power supply control unit,
wherein the power supply control unit switches the numerical control device to the power-off state when the first elapsed time has reached a first predetermined time (PTM1).

8. The wire electrical discharge machine according to claim 7, wherein
the time measurement unit measures a second elapsed time (TM2) from when the numerical control device is switched to the power-off state by the power supply control unit, and
even when the temperature acquired by the temperature acquisition unit is lower than the predetermined temperature, the power supply control unit does not switch the numerical control device to the power-on state until the second elapsed time reaches a second predetermined time (PTM2).

9. A method for controlling a wire electrical discharge machine (20) that machines a workpiece (WK) immersed in a working fluid (LA, DL, CL), by using a wire electrode (ET), the method comprising:
a pump control step of controlling and driving a pump configured to suck and discharge the working fluid, when a numerical control device (212) of the wire electrical discharge machine is in a power-on state;
a temperature acquisition step of acquiring a temperature (TP) of an environment in which the wire electrical discharge machine is installed or a temperature (TP) of the working fluid; and
a first power supply control step of switching the numerical control device to the power-on state when the numerical control device is in a power-off state and the temperature acquired in the temperature acquisition step is lower than a predetermined temperature (STP).

10. The method for controlling the wire electrical discharge machine, according to claim 9, further comprising:
a first time measurement step of measuring a first elapsed time (TM1) from when the numerical control device is switched to the power-on state in the first power supply control step; and
a second power supply control step of switching the numerical control device to the power-off state when the first elapsed time has reached a first predetermined time (PTM1).

11. The method for controlling the wire electrical discharge machine, according to claim 10, further comprising:
a second time measurement step of measuring a second elapsed time (TM2) from when the numerical control device is switched to the power-off state in the second power supply control step,
wherein, in the first power supply control step, even when the temperature acquired in the temperature acquisition step is lower than the predetermined temperature, the numerical control device is not switched to the power-on state until the second elapsed time reaches a second predetermined time (PTM2).
